# EUROPEAN PATENT APPLICATION

(11) **EP 3 792 717 A1**
(43) Date of publication of application: **17.03.2021**
(21) Application number: 19197054.0
(22) Date of filing: 12.09.2019
(51) Int. Cl.: G05B 19/418, G06N 20/00

(54) **TRACKING SYSTEM**

(71) Applicant: FRAUNHOFER-GESELLSCHAFT zur Förderung der angewandten Forschung e.V., 80686 München (DE)
(72) Inventor: SEITZ, Jochen, 91058 Erlangen (DE); NICKEL, Christian, 91058 Erlangen (DE); KRAM, Sebastian, 91058 Erlangen (DE); SOBEL, Christopher, 91058 Erlangen (DE)
(74) Representative: König, Andreas Rudolf

(57) **Abstract**

A system comprises an analyzing unit configured for receiving a sensor signal indicating a use of a tool and for analyzing the sensor signal for a sensor signal characteristic. The system comprises a database having stored thereon at least one predetermined sensor signal characteristic and an associated signal information. The system comprises a classification unit configured for determining a correspondence between the sensor signal characteristic and the predetermined sensor signal characteristic. The system comprises an interface configured for outputting, to a user, the signal information associated with the predetermined sensor signal characteristic, and for receiving an input signal indicating at least a match or a mismatch of the use of the tool with the predetermined sensor signal characteristic. The classification unit is configured for adapting the database based on the input signal for a subsequent sensor signal.

## Description

The present invention relates to a tracking system and to a method for operating the same, for example, to organize the tracking system. The present invention further relates to an automated and interactive training of algorithms for recognizing actions and results in multi-sensor detection of work processes including tools.

With an increasing digitalization in the industrial sector, the demand for automated detection and monitoring of work steps is increasing since it allows automated quality assurance in real time. Machine learning (ML) methods are used in order to be able to detect the large number of different tools and work steps by means of sensor data. Annotated or "labelled" data are required for training these methods, which means that the belonging/association to tools and works steps has to be known for the sensor data.

Humans manually operating a tool are still an important element in assembly work. Humans can frequently perform individual work steps independently after a short learning period already, whereas in highly automated assembly robots, complex programming is necessary, which often entails a lot of time and costs. When changing the work steps, humans, compared to robots, are able to react very flexibly and are able to adapt quickly.

However, humans make mistakes, like when shortly being inattentive or being distracted from work. A mistake may, for example, be an omitted screw connection, tightening a screw at the wrong screw position or disregarding a screw order. Mistakes in assembly may also be caused by defect in the material to be processed. Usually, mistakes cause costs for repair and post-processing. The later the mistake is recognized in production line, for example, the higher the costs will be. When the mistake is only discovered at the customer, what results, apart from the costs for repair, is a loss of reputation. For these reasons, systems recognizing the mistakes already during the assembly work and giving an alarm directly when the mistake occurs or giving direct feedback are important.

Consequently, the automated monitoring of work steps and work processes is an essential component of the modern connected industrial environment. Using plug-in modules which contain sensor and communication modules offers a cheap and scalable way of detecting most different work steps.

It is thus desirable to have tracking systems that may easily be supplied with workflow data.

It is thus an object of the present invention to provide for a concept that allows to easily supply a tracking system with workflow data.

This object is achieved by the subject matter as defined in the independent claims.

A recognition of the present invention is to establish, generate or update a database that has labelled sensor data to identify a work step by providing a user that links or associates information with monitored sensor signals, e.g., to label the sensor data, with a suggestion of what kind or type the sensor data to be labelled probably are. This allows the user to feed back a match or mismatch of the suggestion but, in particular, a match allowing for an easy and rapid generation of labels.

According to an embodiment a system comprises an analyzing unit configured for receiving a sensor signal indicating a use of a tool and for analyzing the sensor signal for a sensor signal characteristic. The system comprises a database having stored thereon at least one predetermined sensor signal characteristic and an associated signal information such as a label. The system comprises a classification unit configured for determining a correspondence between the sensor signal characteristic and the predetermined sensor signal characteristic. The system comprises an interface configured for outputting, to a user, the signal information associated with the predetermined sensor signal characteristic. The interface is configured for receiving an input signal indicating at least a match or mismatch of the use of the tool with the predetermined sensor signal characteristic, e.g., a positive or a negative acknowledgement. The classification unit is configured for adapting the database based on the input signal for a subsequent sensor signal. This allows to easily supply the tracking system with workflow data and to increase the likeliness of the correctness of the result of the classification unit for later steps.

According to an embodiment, the system comprises a sensor arrangement configured for providing the sensor signal. This allows to obtain the sensor data at the system directly. According to an embodiment, the sensor arrangement comprises a sensor element being mechanically connected to the tool, a sensor element being arranged adjacent to the tool and/or a sensor element being mechanically connected to a user of the tool. That is, the sensor element is implemented so as to detect a use of the tool and to provide for suitable sensor data. This allows for a high flexibility of the system.

According to an embodiment, the system is implemented such that the analyzing unit is configured for determining, from the sensor signal, an operating mode, a time interval or time duration of a use of the tool. This allows for an accurate learning of the system as, in addition to a type of the tool, a duration of a use thereof may be determined.

According to an embodiment, the system is configured for storing information derived from the sensor signal and associated signal information as part of a workflow to be tracked. That is, by use of labelled sensor data information may be generated that allow a tracking system to monitor or track a workflow to be executed.

According to an embodiment, the interface is configured for receiving the input signal indicating a mismatch of the use of the tool with the predetermined sensor signal characteristic and for receiving a corrected signal information. The system is configured for storing information derived from the sensor signal and the corrected signal information as part of a workflow to be tracked and/or as a new entry in the database. This allows to include unknown or undetected work steps into the work flow and/or the database. According to an embodiment, the database has stored thereon a plurality of predetermined sensor signal characteristics and a corresponding plurality of associated signal information. The classification unit is configured for determining a correspondence between the sensor signal and one of the plurality of predetermined sensor signal characteristics and to select this predetermined sensor signal characteristic as a selected sensor signal characteristic. The system may be configured for outputting the signal information associated with the selected sensor signal characteristic to the user. That is, the classification unit may perform a preselection or pre-classification of the collected or received sensor signal which allows for low error rates, fast inputs by the user as he or she may acknowledge correct determinations/classifications of the sensor signal to reduce a manual classification to events where the system provides for no or incorrect classification.

According to an embodiment, the system is configured for outputting the signal information associated with the predetermined sensor signal characteristic and for receiving the input signal in a first operating mode, e.g., a learning mode. The system is configured for tracking a workflow comprising a use of the tool or an apparatus similar to the tool in a second operating mode, e.g., a tracking mode or an execution mode. Using an apparatus similar to the tool may allow to use, for the workflow, a tool which is similar or within a same classification or group of tools when compared to the tool that was used to generate the sensor signal in the learning mode. Such a group or classification may be, for example, a hammer, a driller or the like but may also allow for a more coarse or more precise classification, e.g., hammers with a hammerhead of a specific material such as wood, rubber or metal and/or comprising a weight within a specific range. The system may be used for both the learning mode and the execution/tracking mode. This allows to learn a new or adapted workflow with the system which is also configured for monitoring the workflow.

According to an embodiment, in the second operating mode, the system is configured for obtaining an operation sensor signal indicating a use of the tool, the apparatus similar to the tool respectively, and for analyzing the operation sensor signal for a correspondence with a predetermined sensor signal characteristic associated with the workflow. That is, the system may be used as a tracking system and may analyze the sensor signals for a correct or predetermined use of a tool to be used for the workflow.

According to an embodiment, the system is configured for generating a set of predetermined sensor signal characteristics representing a predetermined workflow in the first operating mode. The system is configured for analyzing a plurality of operation sensor signals for a correspondence with the set of predetermined sensor signal characteristics. The system is configured for outputting a result indicating a correspondence of the use of the tool, the apparatus similar to the tool respectively, with the predetermined workflow. That is, the system may output a result indicating if the use of the tool was within the scope of the workflow to be tracked.

According to an embodiment, the system is configured for sequentially receiving a plurality of sensor signals representing at least a part of a workflow. The tracking system is configured for classifying the plurality of sensor signals using the database. The system is configured for receiving a corresponding number of input signals, e.g., via the interface. The system is configured for updating the database based on the input signals and for storing, in a memory, a workflow representation as a predetermined workflow, the workflow representation comprising a number of steps. The tracking system is configured for storing, for each step, information indicating the associated signal characteristic. That is, by providing the plurality of sensor signals representing at least the part of the workflow, the workflow can be stored at least in a parameterized manner and a re-execution of the workflow may then be tracked with the system.

According to an embodiment, the workflow comprises a plurality of steps, wherein for each step an associated tool, an associated position and/or orientation within a working area and a duration may be stored. This allows for tracking complex workflows.

According to an embodiment, the sensor signal characteristic comprises an action related portion indicating an action of the tool. The sensor signal comprises a location related portion indicating a location or orientation of the tool. That is, beside a pure authorization or use of the tool, also a location or orientation of the tool may be tracked which allows for a precise tracking.

According to an embodiment, a method comprises: receiving a sensor signal indicating a use of a tool; analyzing the sensor signal for a sensor signal characteristic; determining a correspondence between the sensor signal characteristic and the predetermined sensor signal characteristic being stored in a database having stored thereon the at least one predetermined sensor signal characteristic and an associated signal information. The method comprises outputting, to a user, the signal information associated with the predetermined sensor signal characteristic. The method comprises receiving an input signal indicating at least a match or mismatch of the use of the tool with the predetermined sensor signal characteristic. The method comprises adapting the database based on the input signal for a subsequent sensor signal.

Further embodiments are defined in dependent claims.

Advantageous embodiments of the present invention are described in the following whilst referring to the accompanying figures in which:
- Fig. 1: shows a schematic block diagram of a system according to an embodiment;
- Fig. 2: shows a schematic block diagram of the system of Fig. 1 in which a database comprises a plurality of entries related to predetermined sensor signal characteristics according to an embodiment;
- Fig. 3: shows a schematic block diagram of a system according to an embodiment, comprising a sensor arrangement;
- Fig. 4: shows a concept related to learning without pre-classification;
- Figs. 5a-5c: show different flows of user interaction in labelling processes according to embodiments;
- Fig. 6: shows a schematic flow chart of a method according to an embodiment;
- Fig. 7: shows a schematic flow chart of a method according to an embodiment, which may be used for providing a predetermined sensor signal characteristic for embodiments of the present invention;
- Fig. 8: shows a schematic block diagram of a concept implementing a method according to an embodiment in which pre-classified concrete actions are used for subsequent identification of actions;
- Fig. 9a: shows a schematic flow chart of a method which is related to the method of Fig. 7 and to labelling a general action window;
- Fig. 9b: shows a schematic flow chart of a method related to the method of Fig. 8 and which may make use of the results of the method of Fig. 9a;
- Figs. 10a-10b: show example graphs related to a determination of a position by use of Bluetooth® signals is described; and
- Fig. 11: shows a schematic block diagram for illustrating an example of channel impulse responses of an ultra-wideband (UWB) localizing system which may be used in embodiments.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

In the following, reference is made to a system configured for adapting databases having stored thereon at least one predetermined sensor signal characteristic and an associated signal information. Such databases may be used for characterizing or parameterizing a workflow to be monitored with a tracking system. Embodiments described herein relate to applications that make use of a tool, for example, in production and/or assembly environments. Embodiments relate to quality assurance of workflows by use of sensor technology. Embodiments further relate to a machine learning of such systems, to a semi-supervised learning that makes use of a user interaction.

In order to render detection and labelling of these data accessible in order for the system to be trained easily and expanded, a method is provided which interactively accompanies this learning process. Different systems realizing this method are described. Two kinds of labelling are basically differentiated between: with and without pre-classification. A system without pre-classification requires the user to allocate the labels, which may take place in different ways: either by means of comparison to an observation made in parallel, by determining a time interval in which an operating step is performed, and/or by means of starting and stopping the recording which is then allocated to a step. For the system with pre-classification according to embodiments, one way is automatically only recognizing signal sections which contain relevant actions or additionally generating direct labelling suggestions for these signal sections. Apart from pure sensor data, information from tracking systems and tracking signals may also be used as input data for the classification. In addition, the systems described may also be used in combination with tracking systems by applying the method either to tracking signals so that characteristic positions and/or other physical states are considered when detecting the work steps, and/or by applying the method suggested to so-called "finger printing" tracking approaches. The method may also contain work processes comprising several work steps which each contain additional requirements/factors like order, alignment, position or time interval.

General challenge in the field of monitored learning is based on the fact that machine learning (ML) methods can be used for detecting most work steps. Developing these methods, for example for recognizing states, actions and results using different sensor data, usually starts with recording and annotating/labeling time series. Annotating/labelling means that each time series is associated, at each time, a so-called label describing the respective state or action. In order to achieve sufficiently high recognition rates, frequently, in particular in neuronal networks, large amounts of annotated data are required. Manually generating annotated data is frequently performed using a video recorded synchronously to the sensor data. Manually annotating is very laborious and consumes a lot of time. Using these annotated or "labelled" data, a predictor or classifier can be trained, which is able to recognize the actions performed from the sensor data.

Up to now, the data required have usually been raised in extended measuring campaigns which are frequently evaluated by experts. However, nowadays there are many different types of hand-operated tools (like screwdriver, drill, riveter, nail pistol, stapler, saw, ...) having different type of driving (electrical, pneumatic, fuel-operated, muscular) employed in the industrial environment for very different activities. For each type of tool in turn, there are different models from different manufacturers. In order to be able to recognize actions of a tool based on sensor data, at first time series of actions by the tool have to be recorded and annotated. Since there is a large diversity of tools and the tools exhibit a partly very different behavior, a large complexity for generating annotated data results.

Therefore, it is more desirable in an industrial environment to form the classification system such that technicians are able to learn the processes on their own accord, like using an interactive platform. This results in the system to remain up-to-date, wherein new work steps, work processes or tools can be added easily. This requires methods and an architecture allowing automatic learning by means of interaction, which will be described below.

The terms work step and work process may be used in connection with embodiments. It is assumed that a work step is an action in a production environment which is recognizable unambiguously, but not bound to a specific context. In the exemplary case of a cordless screwdriver, screwing in a screw would represent such a step. A work process may comprise one or several work steps and contain a different context, like a position, a location ("the screw is screwed in from below at a position P") or an order ("the screw is screwed in from below at the position P1, subsequently the screw is screwed in at the position P2").

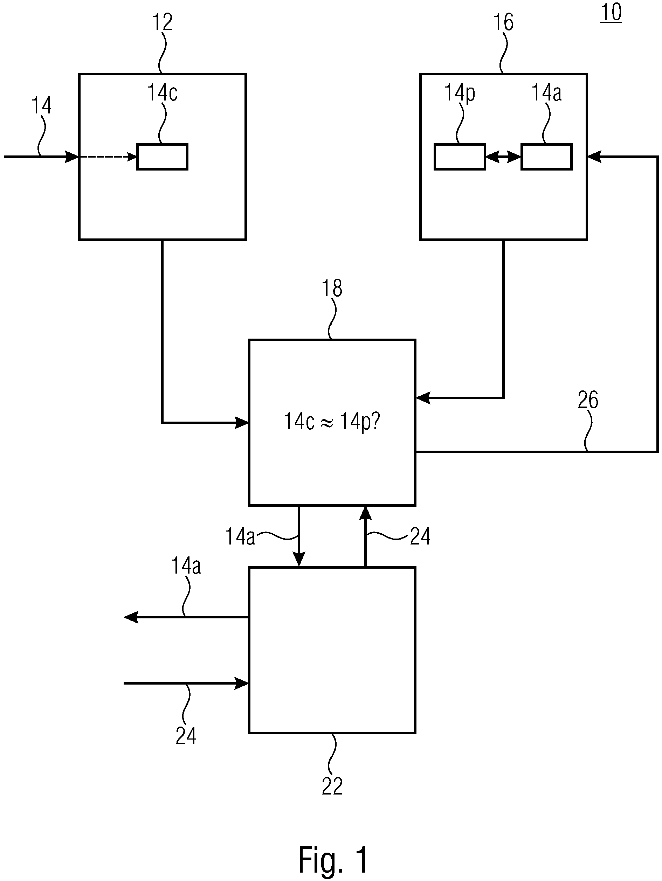

Fig. 1 shows a schematic block diagram of a system 10 according to an embodiment. System 10 comprises an analyzing unit 12 configured for receiving a sensor signal 14 indicating a use of a tool. That is, the sensor signal 14 may be obtained from sensing parameters related to a tool, a use thereof respectively. The analyzing unit 12 is configured for analyzing the sensor signal 14 for a sensor signal characteristic 14c. The sensor signal characteristic may comprise, amongst other things, one or more of a frequency, an amplitude, phase shifts, a time duration/time interval, a start time, stop time or the like. The sensor signal 14 may comprise information gathered from one or more sensor elements as will be described later.

System 10 comprises a database 16 having stored thereon at least one predetermined sensor signal characteristic 14p.

Together with the predetermined sensor signal characteristic 14p an associated signal information 14a is stored in the database. The associated signal information may be referred to as a label labelling the predetermined sensor signal characteristic. For example, the associated signal information may comprise an identifier indicating a type of a tool being used, an operating mode of the tool (e.g., a torque, a direction or tightening/untightening, a speed, a differentiation between drilling/hammer drilling/hammering with a drill hammer), a duration of a tool being used or other information indicating a use of a tool, wherein the predetermined sensor signal characteristic is information that may be used as a reference for a comparison with a sensor signal. The predetermined sensor signal characteristic may be derived from measurements that may also be calculated without specific sensor data. E.g., specific vibrations related to a specific speed of a tool may be derived from other data that relates to a different speed or the like.

System 10 comprises a calculation unit 18 configured for determining a correspondence between the sensor signal characteristic 14c and the predetermined sensor signal characteristic 14p. For example, the classification unit 16 may determine if the sensor signal characteristic 14c matches, at least within a tolerance range, the predetermined sensor signal characteristic 14p. According to an embodiment, this may be understood in a way that the calculation unit 18 determines whether the system 10 already knows the sensor signal characteristic 14c obtained from the sensor signal 14.

System 10 comprises an interface 22 configured for outputting, to a user, the signal information 14a that is associated with the predetermined sensor signal characteristic 14p. That is, system 10 may output the associated signal information 14a in a case where the system 10 determines a corresponding or match between the sensor signal characteristic 14c and the predetermined sensor signal characteristic 14p. The interface 22 is configured for receiving an input signal 24, for example, from the user. The input signal 24 may indicate, for example, a match or, alternatively, a mismatch of the use of the tool with the predetermined sensor signal characteristic 14p.

That is, by use of the interface 22, the user may obtain information by the associated signal information 14a whether the sensor signal 14 was obtained from a use of a tool, the use of a corresponding tool, the same tool or a similar apparatus, characterized in the predetermined sensor signal characteristic 14p. For example, the information related to the use of the tool (or the apparatus similar hereto) may comprise a binary information that may be interpreted as "used"/"unused". The information related to the use may alternatively or in addition comprise information about details of the use such as duration, start time, stop time, magnitudes (e.g., how far a hammer is winded up) and/or an operating mode of the tool. According to an example, information indicated or encoded in the label 14a may be outputted with the interface 22, for example, in a graphical, haptic and/or acoustical way. That is, the system 10 may provide a suggestion how to characterize the sensor signal 14 by outputting a corresponding information with the interface 22. With the input signal 24, the system 10 may obtain information whether its suggestion was correct or incorrect. The input signal 24 may comprise additional information, for example a new or corrected information to be associated with the sensor signal characteristic 14c, for example in a case where there is no match between the sensor signal characteristic 14c and the content of the database 16 or in a case where the predetermined sensor signal characteristic 14p was incorrectly determined by calculation unit 18.

The classification unit 18 may obtain the input signal 24 or information derived thereof, and is configured for adapting the database 16 based on the input signal 24 for a subsequent sensor signal to be received with the analyzing unit 12. For example, the calculation unit 18 may provide for an additional entry in the database 16 and/or may alter, modify or delete an existing entry. The calculation unit 18 may provide a respective database signal 26 to the database 16.

The analyzing unit 12, the database 16 and the calculation unit 18 may be formed as separate components comprising, for example, a CPU (central processing unit), a field programmable gate array (FPGA), a microcontroller, a volatile and/or non-volatile data memory or the like or combinations thereof. Alternatively, one or more of the analyzing unit 12, the database 16 and the calculation unit 18 may comprise a joint or common component. The analyzing unit 12 may comprise a filter structure for filtering the sensor signal 14 by use of hardware components and/or software components. The filter structure may be used for efficiently extracting the sensor signal characteristic 14c from the sensor signal 14.

The calculation unit 18 may be configured for performing a machine learning from the content of the database 16, i.e., how to classify a sensor signal 14. For example, the database 16 may comprise a plurality of entries, each entry comprising a predetermined sensor signal characteristic and a corresponding associated signal information. That is, different usages/handlings and/or operating modes of a same or similar tool may lead to multiple entries in the database 16 as well as usages of different tools. From the possibly high numbers of entries, the calculation unit 18 may classify the sensor signal 14 with a high confidence.

The system 10 may be referred to as a semi-automated, semi-supervised or assisted learning system, as the classification the system determines by use of the calculation unit 18 is provided to the user by use of the interface 22. The user may confirm or refuse or overrule the suggestion of the system 10 and may thus correct the determination of the system 10. Such a correction may on the one hand have positive aspects for further iterations in which the calculation unit 18 classifies a sensor signal but may also lead to a pre-size classification of a workflow to be modelled by use of the system 10.

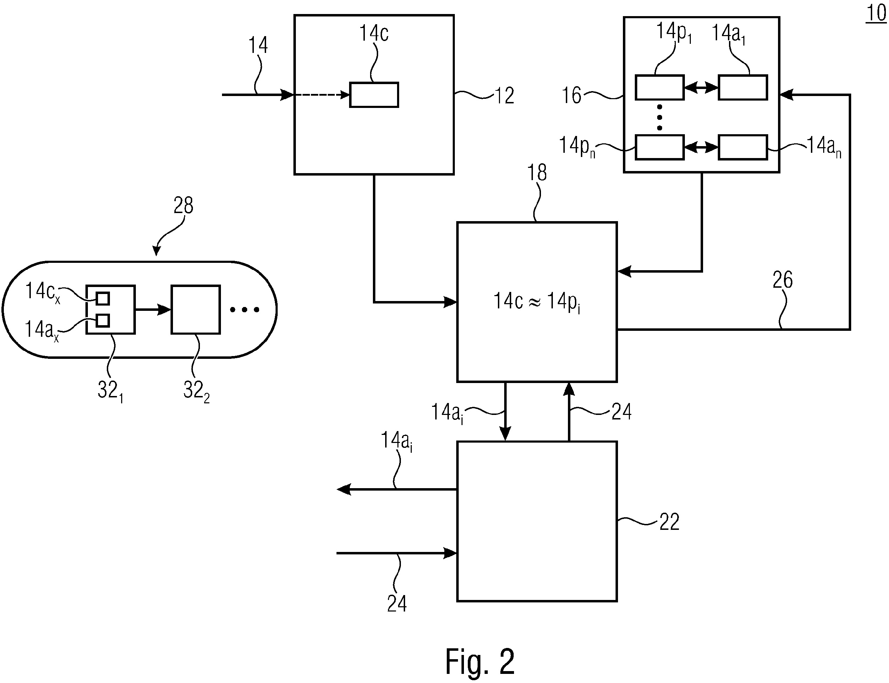

Fig. 2 shows a schematic block diagram of the system 10. The database 16 may comprise a plurality of n entries such that predetermined sensor signal characteristics 14p₁ to 14pₙ may be stored in the database 16. Each predetermined data characteristic 14p₁ to 14pₙ may be labelled, i.e., an associated signal information 14a₁ to 14aₙ may also be stored in the database 16. The analyzing unit 12 may be configured for determining the sensor signal characteristic 14c from the received sensor signal 14.

The calculation unit 18 may be configured for determining or selecting one of the entries of the database 16 as corresponding or matching the determined signal characteristic 14c. That is, from the n entries with n being at least 1, at least 5, at least 10, at least 100, at least 500 or even more, entry i is selected as selected sensor signal characteristic. The associated signal information 14aᵢ may be output with the interface 22 and the input signal 24 may be received. The input signal 24 may affirm or correct the decision of the calculation unit 18 such that, based on the input signal 24, an affirmed or corrected label for the determined sensor signal characteristic 14c is known at the calculation unit 18.

The system may be configured for sequentially receiving a plurality of sensor signals representing at least a part of a workflow. The system may be configured for classifying the plurality of sensor signals using the database, for receiving a corresponding number of input signals, for updating the database based on the input signals and for storing, in a memory, a workflow representation as a predetermined workflow, the workflow representation comprising a number of steps. The system may be configured for storing, for each step, information indicating the associated signal characteristic.

The system 10 may be configured for storing information related to a workflow 28 to be tracked. The workflow 28 may comprise one or more work steps 32 and may also be referred to as a work process. The workflow 28 may define a sequence of one or more same, similar or different tools at a same or different locations in a same or different manner. For example, a same tool may be used at different locations within a working area for a same or a different time, for example, when sequentially tightening screws. Alternatively or in addition, different tools may be used in a same or different location and/or orientation, for example, when first providing an adhesive and afterwards heating the adhesive. This example should only provide for an illustration of embodiments but shall neither limit the tools to be used nor parameters by which work steps 32 may differ within the workflow 28.

The system 10 may be configured for receiving a plurality of sensor signals 14, each sensor signal 14 characterizing at least a part of a work step 32. The user may be provided with a classification of the work step 32 by outputting the associated signal information 14ai. After confirmation or acknowledging the suggested classification or after correcting the information, the system may be configured for storing information 14cₓ derived from the sensor signal and for storing associated signal information 14aₓ as part of the workflow 28. The workflow 28 may be tracked with the system 10 or a different system afterwards. As described, the interface 22 may be configured for receiving the input signal 24 indicating a mismatch of the use of the tool with the predetermined sensor signal characteristic 14p, 14pi, respectively. The interface may be configured for receiving a corrected signal information with the input signal 24. The system 10 may be configured for storing the information derived from the sensor signal 14 and the corrected signal information as part of the workflow 28.

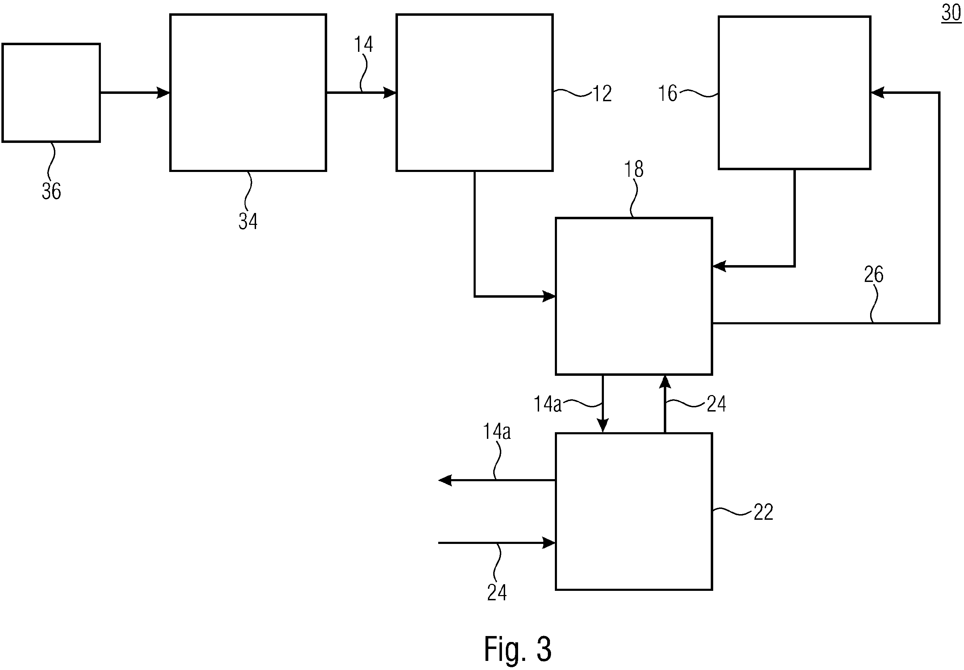

Fig. 3 shows a schematic block diagram of a system 30 according to an embodiment. The system 30 may be based on the system 10 and may comprise the analyzing unit 12, the database 16, the calculation unit 18 and the interface 22 accordingly. When compared to the system 10, the system 30 may comprise a sensor arrangement 34 configured for providing the sensor signal 14. The sensor arrangement 34 may comprise one or more sensor elements arranged and/or configured for monitoring a use of a tool. The tool 36 may be monitored with a single sensor element or a plurality of same or different sensor elements, i.e., a combination of sensor elements. The obtained sensor data may be transmitted to the analyzing unit 12 directly by use of a wired or wireless connection. Alternatively, a preprocessing may be performed, so as to provide the sensor signal 14 as a preprocessed signal, e.g., by use of filter structures or the like that allow for an extraction of features from the signal such that the extracted features may be compared or evaluated. Alternatively to transmitting the sensor signal 14 to the analyzing unit, the sensor signal 14 may first be stored in a data storage or a memory after being obtained with the sensors and may later be read from the data storage. The sensor signal 14 may thus be obtained from the sensor arrangement directly by a wired or wireless connection but may also be obtained from a data storage.

A sensor element of the sensor arrangement 34 may be mechanically connected to a tool 36 to be monitored. For example, the sensor element may comprise an accelerometer, a gyroscope or the like such that the sensor signal 14 may comprise information about a movement of the tool 36 when the tool 36 is used. Alternatively or in addition, a sensor element may be arranged adjacent to the tool 36. That is, the sensor element is arranged in a way that it recognizes the parameter to be detected (sound with a microphone, motion or vibration with an accelerometer or a gyroscope, pictures with a camera, magnetic fields with a magnetometer, visible or invisible electromagnetic radiation etc.) in a sufficient way. For example, the sensor element may capture or monitor a magnetic field or may obtain one or more pictures from a working space such that the sensor signal 14 may comprise information about respective changes in the work area. Alternatively or in addition, a sensor element may be mechanically connected to a user of the tool 36, for example, a wristband or a wearable such that the sensor signal 14 may comprise information about a movement of the user of the tool, thereby indicating the use of the tool 36.

Embodiments relate to a plurality of tools that may have different kinds of driving like electrical, pneumatic, fuel-operated (like petrol) or muscular (e.g., by hand). The sensor arrangement 34 may be implemented such that sensors or sensor elements located on or close to the respective tool 36 to be able to detect significant data and data which can be attributed to a specific action or result. Without limiting the scope of the present embodiments, the tool 36 may be or may comprise:
- screwdriver and wrench, ratchet, torque wrench, turnscrew, electric screwdriver etc.
- drill, drill hammer/hammer drill
- bell hammer
- vibrator/vibrating plate, rammer
- riveter
- plug
- presses
- saws
- separating machines (angle grinder)
- grinders, plane, dremel, files, graters
- milling machines, trimmers
- stirrers
- stapler
- hammer
- nail guns
- soldering and welding devices
- gluing devices (hot glue guns)
- pliers
- cutting tools, (scissors)
- cleaning systems (high-pressure, air, water)
- spraying systems (water, varnish, ...)
- axes
- suckers
- pumps
- medical tools
- special machines for producing or separating connections or in assembly, production and crafts

For modelling the workflow 28, different tools 36 or different usages of a same or different tools may be captured, classified, labelled and stored as information related to the workflow.

For training a system to classify the sensor signal 14 and/or for modelling a workflow, different methods and architectures of systems are possible in order to allow interactive training according to embodiments. Each of the realizations starts from one or several sensor platforms which are attached either to the object (like tool/work piece) or in direct proximity (adjacent) to the object. These platforms may be equipped with any combination of sensors, like acceleration sensor (accelerometer), gyroscope, magnetic field sensor (magnetometer), microphone, camera, air pressure sensor (barometer), temperature sensor, humidity sensor and others. The sensors provide a continuous data stream which is either filtered on the sensor platforms or pre-processed or communicated directly.

Additionally, position-related data from sensors and/or different information sources can be used. This may either be the output of systems, like optical or radio-based tracking systems, which estimate the position or pose (6 DOF coordinates) of objects, or systems which provide position-related quantities, like distances, field-strength values (e.g., received signal strength: RSS) or channel impulse responses (CIRs). The positions or position-related sensor data here are used to establish at which location a work step is performed.

The second core component is a platform for interactively learning the classification and prediction algorithms. Here, depending on the architecture (see potential realizations), the user is enabled to provide the measuring data with a "label" defining the work step.

The third core component is a database including labelled/annotated data. The data interactively annotated by the user are stored there in a form allowing the usage thereof for training classifiers and predictors. Apart from labels, the respective raw data are either stored directly, or else features extracted therefrom.

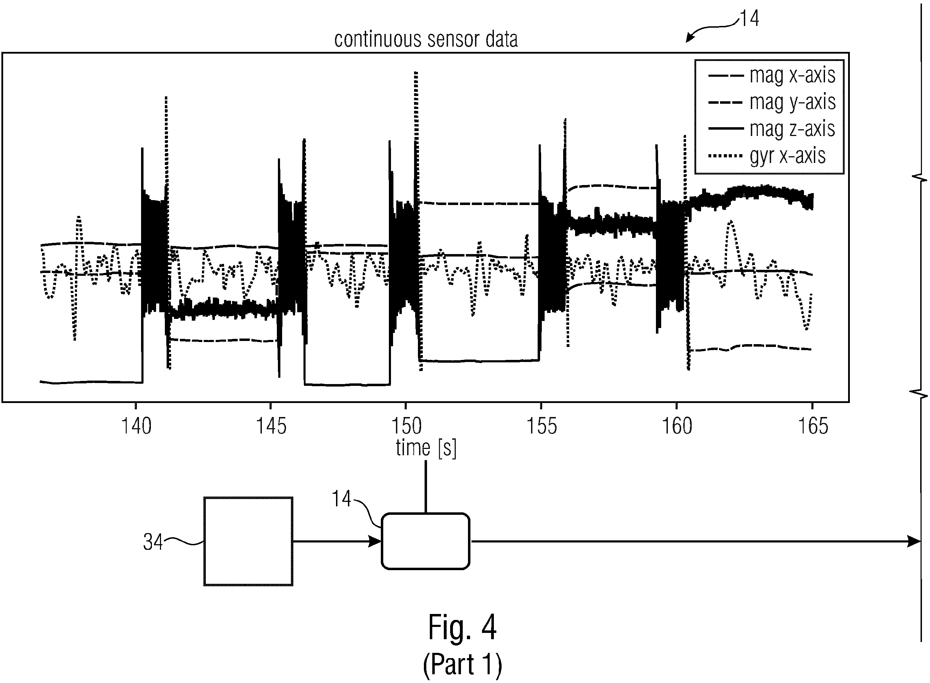

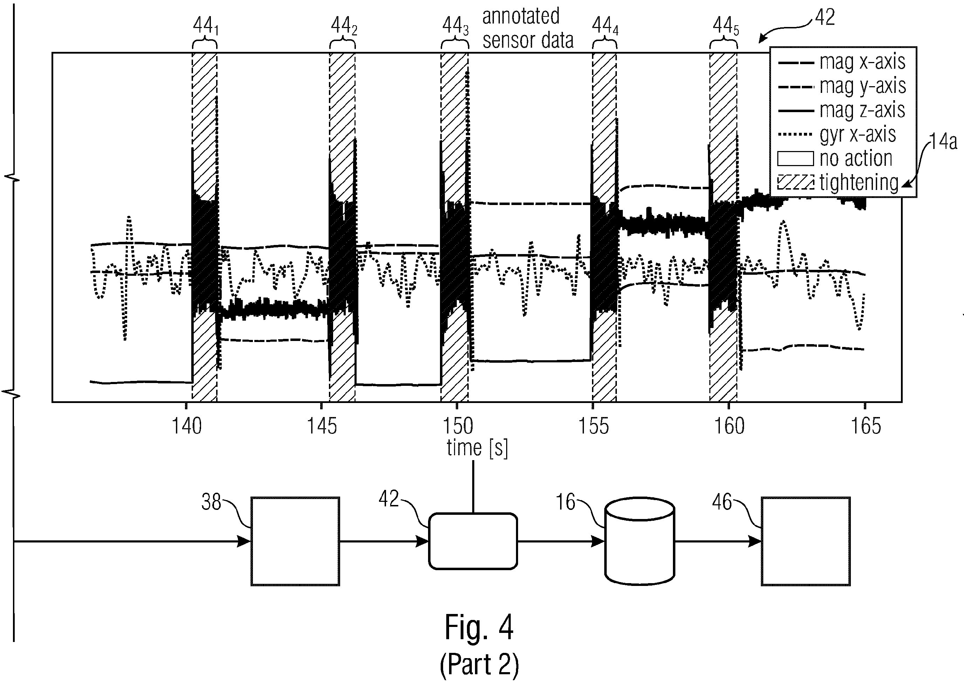

In this realization according to embodiments, the data stream from the sensor platforms is fed directly to the platform for interactive learning. Here, the user is enabled to allocate a label to the sensor data, whereupon said annotated data are stored in the database. In this case, the label resembles a state since there is a label for each time of the data stream. For process monitoring, particularly changes in state are of relevance. The flow of such a process including exemplary sensor data is shown in Fig. 4: the sensor data are recorded and subsequently labelled by the user, wherein the work steps or states are defined by a start and end time or a time interval.

In Fig. 4, a concept according to the learning without pre-classification is shown. In this concept, the sensor arrangement 34 may be used and may comprise sensors on or close to the object/tool. The sensor arrangement 34 may provide for a continuous data stream as sensor signal 14. For example, the sensor signal 14 may comprise magnitudes of accelerations in different axes x, y and z and information obtained from a gyroscope in connection with the x-axis. A user may use a platform for interactive labelling 38 which may optionally partly or in total correspond to the interface 22. By use of the platform for interactive labelling, a label is allocated to the data for each time interval so as to obtain a labelled data stream 42. The labelled data stream 42 may indicate time intervals 44₁ to 44₅ in which the sensor signal 14 comprises relevant information indicating the use of the tool. This labelled data stream may be stored in the database 16, wherein the labelled data stream 42 may comprise the predetermined sensor signal characteristic 14p and the associated signal information 14a. A training unit 46 may be used for training the classifier for recognizing states. Such a training unit 46 may be part of the calculation unit 18 of the system 10 and/or 30. When compared to such a concept, embodiments provide for a suggestion, to the user, how to label the sensor signal 14. Thereby, the labelling process may be assisted and accelerated as well as being performed with a low error rate.

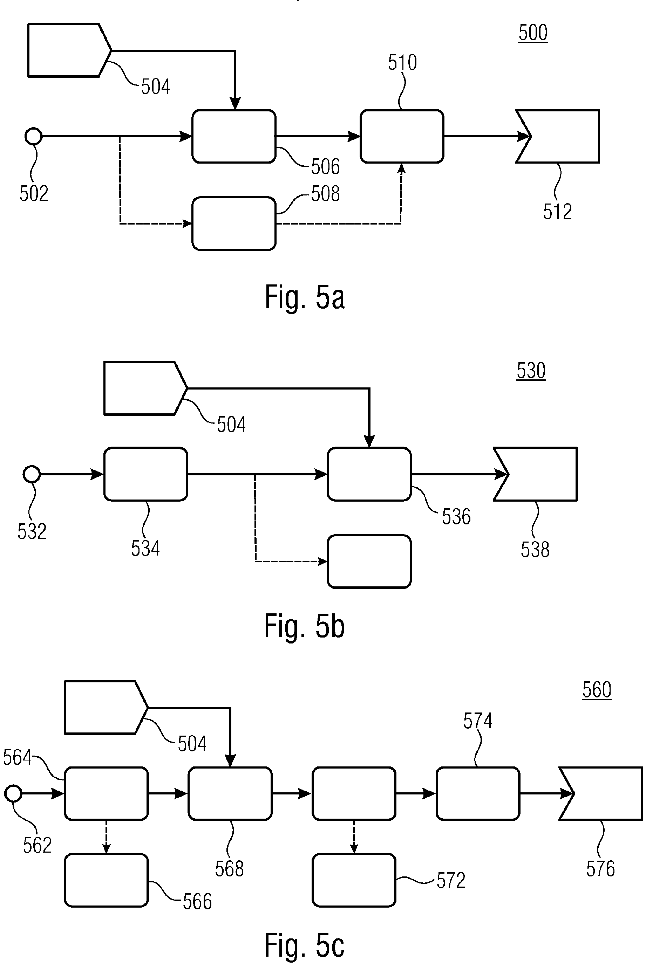

Different flows of user interaction in the labelling process are possible, which are shown in Figs. 5a-5c:

Figs. 5a-5c show schematic implementations of methods 500, 530, 560, respectively. Methods 500, 530 and 560 relate to a labelling without prior or upstream action classifier. A step 502 of method 500 comprises a manual label assignment after performing the action for a continuous data stream obtained in a step 504. A continuous data stream is recorded in a step 506. An action x is performed for the duration tx and observed in a step 508. From the data stream recorded, a window having a duration tx is manually cut (using the observation from step 508) and provided with the action label x in a step 510. Thereby, a labelled data stream is obtained, step 512.

Fig. 530 comprises an automatic label assignment before performing the action, step 532. In a step 534 an action x and a duration tx are selected. In a step 536, from the continuous data stream obtained in step 504, a window having the duration tx is automatically cut and provided with the action label x so as to obtain the labelled data stream, step 538. This results in the requirement that the action x has to be executed for the indicated duration tx in the monitored workflow subsequently.

In Fig. 5c, an automatic label assignment is performed during performing the action being the basis for the continuous data stream in step 504. An action x is selected and a timer is started at the time tx₁ in a step 564. Thereby, information is obtained that the action x is started at the time tx₁, step 566. The continuous data stream is recorded in step 568. At time tx₂, the timer is stopped, thereby providing for information that action x is stopped at the time tx₂. In a step 574, a time window (tx₂ - tx₁) is automatically cut from the data stream recorded and provided with the action label x to obtain the labelled data stream, step 576.

In other words:
- Fig. 5a: The data recorded are allocated to the work steps by the user using an observation, like a video recorded in parallel to the sensor data. This variation requires a complicated manual labelling process, since synchronization of the observations and the sensor data is required and all the individual steps have to be performed manually.
The resulting annotated data include a data stream for which action/state labels are associated at each point in time. Here, a neutral state ("class zero") can be used, which is valid for all the points in time for which no specific action label has been allocated.
- Fig. 5b: Before the data are recorded, action and time interval are determined or selected using a number of predetermined action labels. Subsequently, the sensor data are recorded and the action label for the time step is assigned. This method is considerably more user-friendly; however, errors may easily occur, for example when the work step is performed only for a part of the time interval.
The resulting annotated data consist of data sections of predefined lengths which a respective action label has been allocated to.
- Fig. 5c: The labels are assigned before performing the action. Here, at first performing the action is started and subsequently a timer is started, and recording the sensor data which are assumed to be belonging to the work step is started. Subsequently, the timer is stopped when the work step is no longer performed. The resulting annotated data contain the predefined action label and the sensor data taken between starting and stopping the timer.

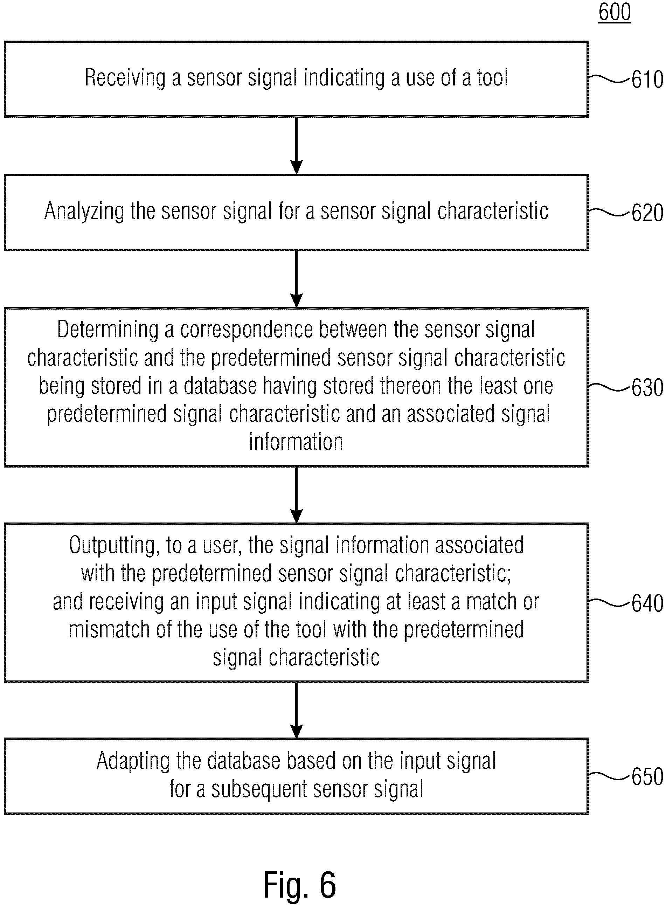

Fig. 6 shows a schematic flow chart of a method 600 according to an embodiment. A step 610 comprises receiving a sensor signal indicating a use of a tool. A step 620 comprises analyzing the sensor signal for a sensor signal characteristic. A step 630 comprises determining a correspondence between the sensor signal characteristic and the predetermined sensor signal characteristic being stored in a database having stored thereon the at least one predetermined sensor signal characteristic and an associated signal information. A step 640 comprises outputting, to a user, the signal information associated with the predetermined sensor signal characteristic. Further, an input signal indicating at least a match or mismatch of the use of the tool with the predetermined sensor signal characteristic is received. A step 650 comprises adapting the database based on the input signal for a subsequent sensor signal.

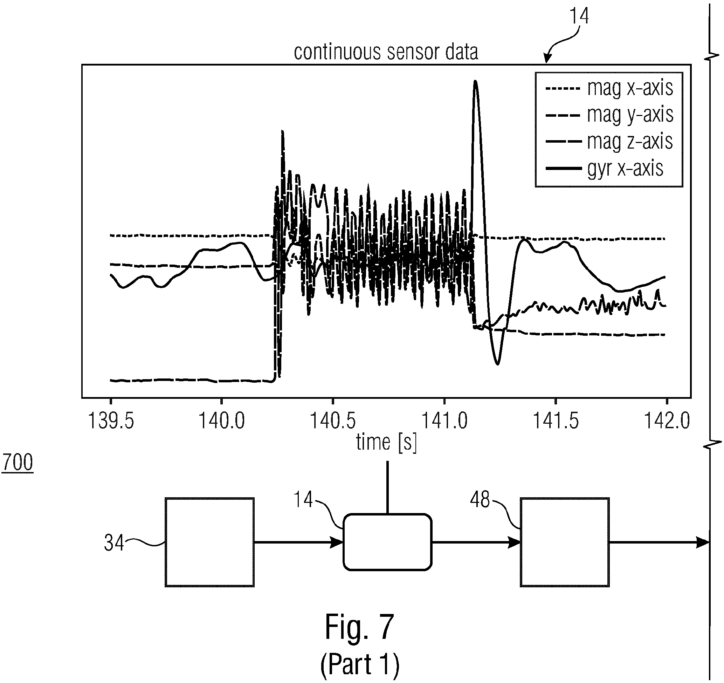

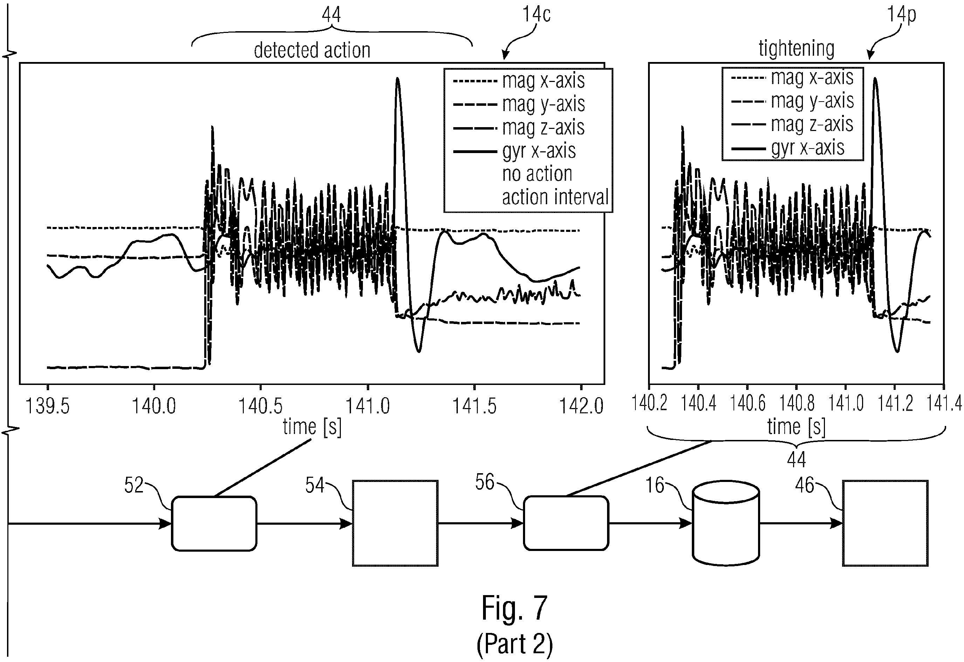

Fig. 7 shows a schematic flow chart of a method 700 which may be used for providing the predetermined sensor signal characteristic for embodiments of the present invention. By use of sensors on or close to the object/tool the sensor signal 14, e.g., a continuous sensor data stream, may be obtained. A general action classifier 48 may be used to provide, i.e., detect or identify, for a general action 52. A section from the data stream 14 having the length of the action detected may be provided to a platform for interactive labelling 54. For the general action 52, a specific label may be assigned by the user. Thereby, the general action may be transferred to a concrete/specific action as a labelled section from the data stream 14 having the length of the action detected may be obtained, step 56. This concrete action may be stored in the database having labelled data stored therein so as to provide for a basis for the training unit 46 to allow training of the classifier for recognizing specific actions, e.g., when providing for proposals to the user in subsequent steps. Although the method 700 is explained by use of structural elements, the method 700 may be understood as comprising respective steps to be performed.

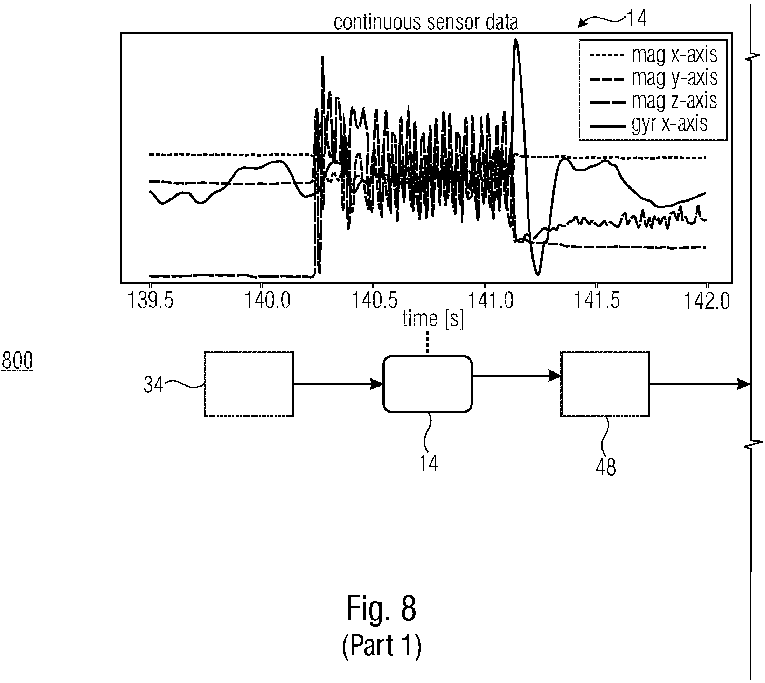

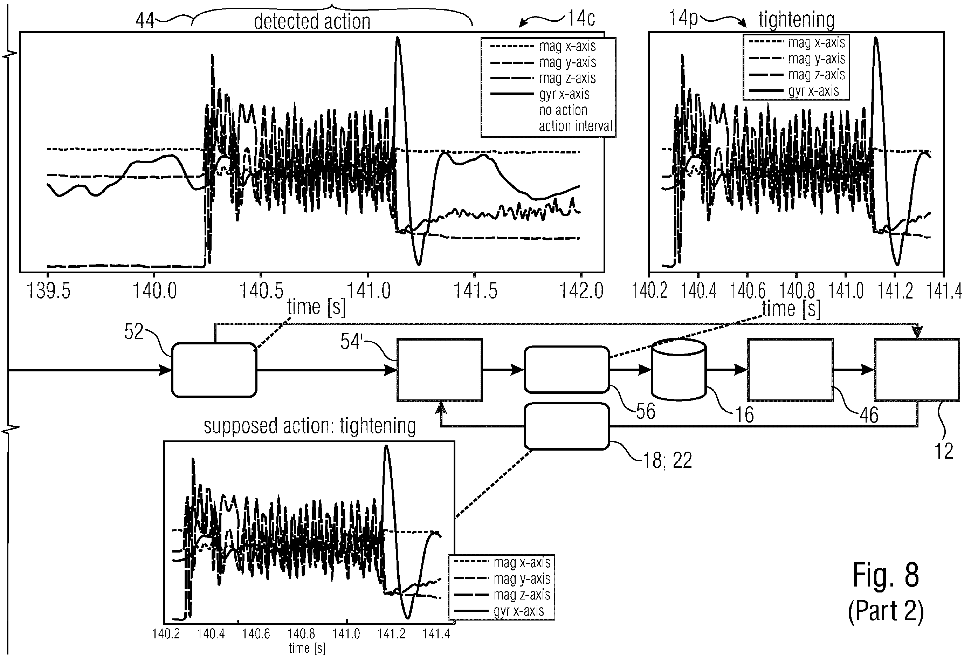

Fig. 8 shows a schematic block diagram of a concept implementing a method according to an embodiment in which the pre-classified concrete actions are used for subsequent identification of actions. As described in connection with method 700, elements and respective steps 34, 40, 48 and 52 are implemented. Platform 54' may be used similarly as described for platform 54 in Fig. 7 but based on an input being based on a signal analyzing by the analyzing unit 12.

When classifying the sensor signal 14 by use of already obtained knowledge in the database 16, the platform 54' may be used differently to enable an interactive labelling in which a label suggestion is checked by the user and corrected, if applicable or necessary. From the general action 52 a concrete/specific action classifier is implemented, e.g., by use of the analyzing unit 12 that classifies the detected action in time interval 44 of the sensor signal 14. A suggestion for a specific action is output, i.e., a labelled section from the data stream having the length of the action detected may be presented in a visual (e.g., by use of a graphical user interface or other devices such as a LED), haptic or acoustical way to the user by use of the calculation unit 18 and/or the interface 22. Thereby, a supposed action may be presented to the user. The platform 54' may be used for checking and optionally correcting the suggested label. Thereby, the concrete action or a specific action is obtained with a labelled section from the data stream 14 having the length of the action detected, step 56. The result thereof may be provided to the database 16 being accessible by the training unit 46 such that subsequent actions may be examined and labels therefore may be provided with a low error rate.

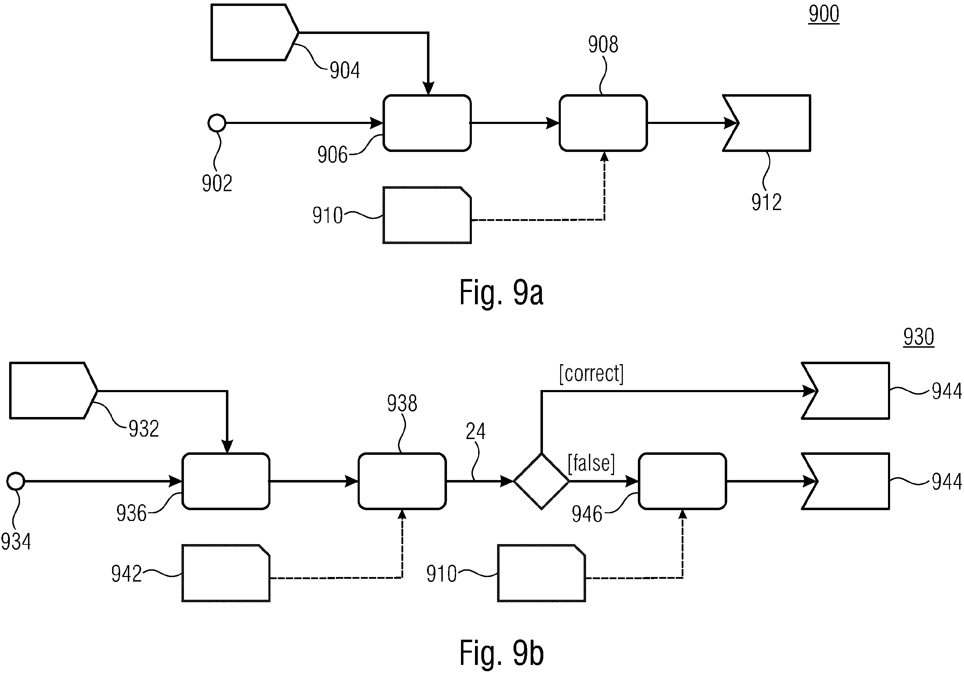

Figs. 9a and 9b described in the following are related to a labelling with an upstream action classifier.

Fig. 9a shows a schematic flow chart of a method 900 which may correspond to the method 700. By labelling a general action window in step 902 and by providing for a general action window which is a section from the data stream 14 having the length of the action detected, in step 904, in a step 906, an incoming general action window may be waited for. In a step 908, a specific action label is selected for the general action. This may be done by using the observation the user makes when viewing the process step or the action, directly, a representation thereof or a record thereof. The user is able to select the correct label, step 910. This may provide for a basis of step 908. Thereby, a labelled action window may be obtained, step 912.

Fig. 9b shows a schematic flow chart of a method 930 which may correspond to the method 800 and which may make use of the results of the method 900 but which may also be performed without the results of method 900. That is, method 930 may be performed independently from method 900 and vice versa.

Based on the labelled action window that may have been created by step 912 or otherwise, a proposal or suggestion for a specific action window may be provided. That is, the labelled section from the data stream 14 having the length of the action detected may be provided in a step 932 as the suggestion. In a step 934, checking and, if applicable, correcting a specific action window may be performed. In step 936, an incoming specific action window is waited for, wherein this may be understood as waiting for input from steps 932 and/or 934. In a step 938, the specific action suggested is checked as to its correctness. This may be implemented, for example, by the user that uses his or her observation such that the user is able to check the suggested label when viewing at the execution of the action or the representation thereof, step 942. By use of the input signal 24, the user may indicate that the decision is correct, thereby resulting in a labelled action window in step 944. Alternatively, the input signal 24 may indicate that the automated suggestion is false. The user may correct the decision of the system by using his or her observation as described for step 910. Thereby, a specific action label is selected for the action, step 946 so as arrive at the labelled action window, step 944.

In other words, Figs. 7, 8, 9a and 9b are related to an automated extraction of relevant actions.

In this realization according to embodiments, the sensor data stream is pre-filtered by using a method for recognizing the actions relevant for the work process. Classical statistical methods, like Bayesian classifiers, or methods of machine learning, like decision trees, support vector machines, random forests or artificial neuronal networks, can be used here. This method allows reducing the amount of data to be transmitted and at the same time reduces the error potential and the complexity of user interaction since insignificant signal sections are discarded and, consequently, not inserted in user interaction. Consequently, a less distinct signal understanding on the part of the user is required for the process of labeling/annotating. General action recognition extracts signal sections which are associated to relevant actions (that means such actions assumed to be characteristic for work steps and work processes). The signal sections are subsequently annotated in interaction with the user and stored in the database, including the respective labels, which serves for training a classifier for recognizing specific actions. Interactively annotating the signal sections here may take place in two different kinds.
1. In the first variation shown in Fig. 7, in the case of a continuous data recording, as described before, the relevant signal sections are filtered by general action recognition. Exemplarily where the red or shaded region (from 140.2 to 141.4 seconds) represents such a relevant signal section. This action recognized still has to be provided with a label. This is done in interaction with the user who allocates a label in correspondence with his or her observation during data recording to the signal section indicated. This renders the general action a specific action provided with a specific label (in this case: tightening). Finally, the sensor data window is stored in the database in combination with the corresponding label and can be used for training a classifier for recognizing specific actions.
2. In the second variation shown in Fig. 8, at first the relevant signal sections are extracted by general action recognition. In contrast to the first variation, however, a further so-called specific action classifier is connected upstream of the platform for interactive learning. This is an already trained classifier which is based on an existing database. The specific action classifier is provided only with the signal section recognized to be relevant and predicts a specific label for the same. Subsequently, interactive labelling takes place where the user is no longer completely dependent on his or her own expert knowledge, but obtains a label suggestion (ideally including a corresponding confidence/probability) for the signal section indicated. This suggestion is examined by the user as to its correctness and corrected, if necessary. Thus, only after checking and confirming or, if applicable, adapting by the user is the general action finally allocated a specific label with which the corresponding signal section is subsequently stored in the database. The latter again serves as a basis for training a specific action classifier. Consequently, there is a way of updating the specific action classifier upstream of the platform for interactive learning with each iteration, that is with each labelling process, and thereby continually increasing the confidence of the predictions.

User interaction in this realization is simplified considerably and accelerated by the assistance on the part of the specific action classifier. Since, in particular when raising large amounts of data in numerous work steps/processes, a both reliable and time-effective labelling process is required, this variation offers a considerable added value for the user.

Detecting an action within sensor data 14 may be understood as detecting variations in the sensor signal 14 or components thereof. Such variations may be detected by a presence or absence of signal transitions, for example, a change in a magnitude above or below a specific threshold. Alternatively or in addition, information derived thereof may be used for detecting actions, for example, a steepness of a signal slope or the like. According to embodiments, the analyzer unit 12 may be configured for determining, from the sensor signal 14, a time interval or time duration of a use of the tool, i.e., a time interval or time duration of the action.

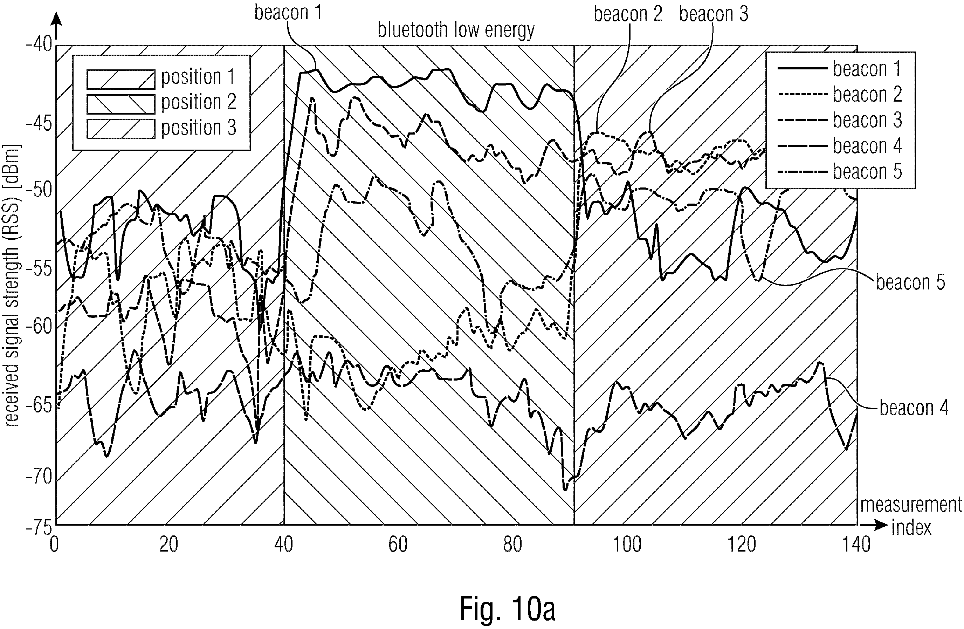

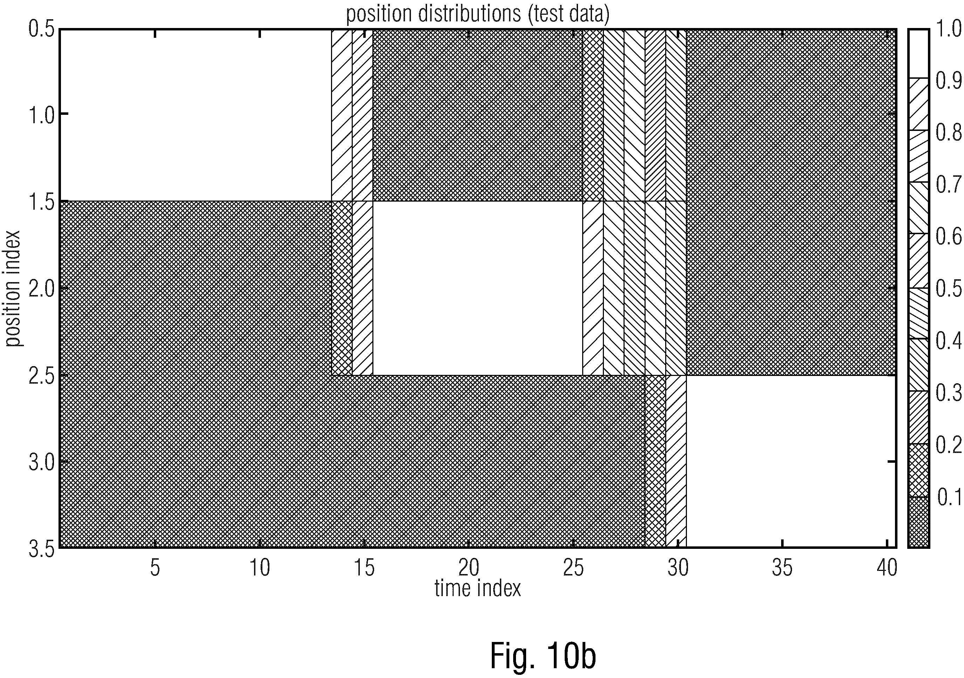

Work flows in connection with embodiments described herein may relate to a sequence of steps, wherein each step comprises a specific action, e.g., a use of a tool and/or a movement of an object. Beside the pure detection of the action or the use of the tool, steps of the workflow may individually or each be combined with position information or location information. The sensor signal 14 may comprise an action related portion indicating an action or use of the tool and may comprise a location related portion indicating a position, location or orientation of the tool. That is, for each step of a plurality of steps an associated tool, an associated position and/or an orientation within a working area and/or a duration of the action may be stored. The duration, position and/or orientation information may be gathered when learning the system, for example, by use of method 700 or 900. In connection with Figs. 10a and 10b, a possible non-limiting example of determining a position by use of Bluetooth® signals is described. By use of different beacons 1, ..., 5 transmitting a Bluetooth® signal and by measuring the respective energy, e.g., by measuring a Received Signal Strength (RSS), a presence of the tool and/or of the user in different positions, e.g., position 1, position 2 or position 3 may be determined. This may be transferred to a classification into a position index as shown in Fig. 10b, wherein the magnitude of the RSS of the Bluetooth® beacons may be transferred to a likeliness of a presence in the areas/positions 1, 2 or 3.

In other words, a combination with position or location information may comprise combining work steps with position and location information which may be of particular interest. This allows monitoring entire work processes, which offers a great advantage for quality assurance. In typical industrial environments, tracking, particularly radio-based tracking, is a great challenge since a plurality of absorbers and reflectors impede the direct sight contact between the tool and the positioning architecture. For this reason, so-called fingerprinting approaches are frequently used in these environments. Here, characteristic signals, like field strengths (RSS) or channel impulse responses (CIRs), are stored in a database for known positions (like position including Cartesian coordinates or discrete positions having identification numbers), the signals being frequently used to generate an estimation of the present location from the signals observed. The system required resembles the process monitoring described and can similarly be formed in an interactive manner. Here, discrete positions, which in this case represent the labels, are recognized instead of work steps. An example of such a positioning process is illustrated in Fig. 10a and Fig. 10b. For a discrete number of positions where work steps can be performed, a database having characteristic Bluetooth® low-energy field strengths was recorded (Fig. 10a). Subsequently, the work steps at the different positions were performed and a classifier is used for establishing a probability of location (Fig. 10b). In other words, Fig. 10a shows example field strength courses for an exemplary fingerprinting positioning process and Fig. 10b shows exemplary courses of a fingerprinting positioning process represented as a distribution of density relative to probabilities of location of discrete positions (position index). The color indicates the respective probability of location estimated by the classifier.

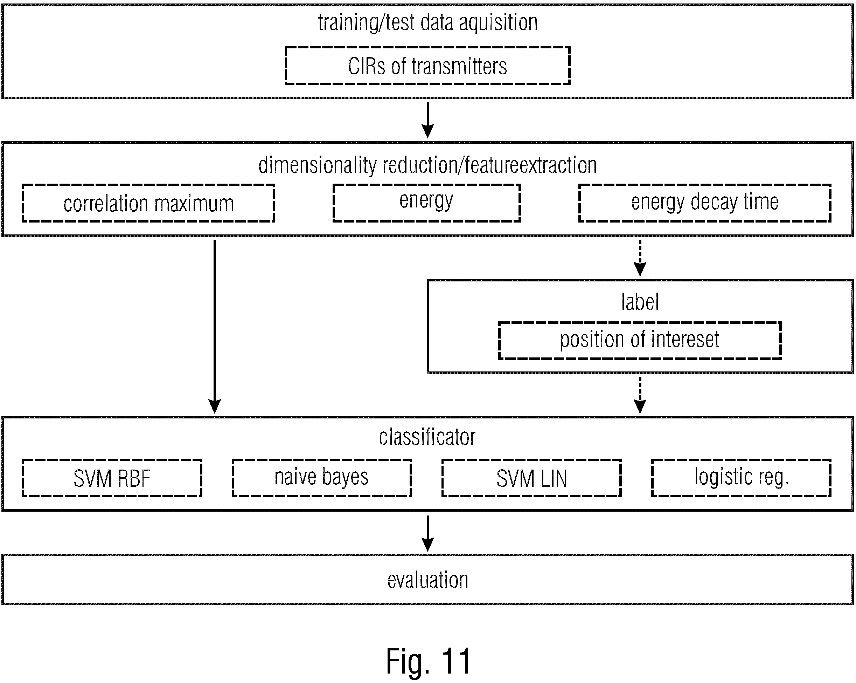

Interactive teaching in this system can be formed similarly to what is shown in Fig. 11 using the example of channel impulse responses of ultra-wideband (UWB) localizing systems, also see reference [1]. When both the work steps and the discrete position have been determined, a work process can be monitored precisely, thereby allowing automatic quality assurance. In other words, Fig. 11 shows an exemplary training of a fingerprinting approach including channel impulse responses.

In many assembly works, observing the order of different work steps is an important basis for correct performance. Exemplarily, when assembling a bearing plate to a motor, it must be kept in mind that the screws are tightened in a diagonally offset and uniform manner. This means that, apart from recognizing individual actions using different sensors on or near the tool, these must be brought to a temporal and positional context. By combining location-related and action-related data, it can finally be established which action or which work step is performed at which location. In this way, errors cannot only be recognized, but also prevented, for example by warning the worker when positioning the tool at the wrong position. Recognizing interrelated work steps within a work process consequently allows checking the work process as a whole and, in the end, contributing to quality assurance. Similarly, time information may also be considered, for example for checking keeping of a work clock.

Embodiments described herein also relate to the following aspects:
Method for utilizing data from sensors which a tool is equipped with or which are located in the direct environment of the tool and which detect movements and/or magnetic fields and/or noises and/or environmental pressure and/or position-related/position-correlated data, for automated annotation of the sensor signals and, based on these data, for automated training of algorithms for recognizing actions and results in work processes including (hand-operated) tools, wherein a classifier generated for the class of tools recognizes undefined actions and results which are general over the course of time or specific defined actions and results and calculates the time windows thereof,
wherein the sensor data in the action time windows are annotated by the specific terms of the actions or result in an automated manner in interaction with a person, manually in the case of general undefined actions and results or automatically in the case of already specifically defined actions and results.
1. A system for a (hand-operated) tool, comprising:
   sensors for detecting sensor signals which change when using the tool; and
   an evaluation unit/analyzing unit which classifies action periods or specific actions using the sensor signals and automatically annotates same by user interaction.
2. The system in accordance with the preceding claim, wherein the evaluation unit comprises at least one filter for filtering or pre-processing a filter signal.
3. The system in accordance with any of the preceding claims, wherein the evaluation unit comprises a classifier for automatically recognizing signal sections which contain relevant actions.
4. The system in accordance with any of the preceding claims, wherein the evaluation unit comprises a classifier for automatically recognizing different actions.
5. The system in accordance with any of the preceding claims, wherein a classifier in the evaluation unit comprises one of the following procedures:
   generalized linear models, linear/quadratic discriminant analysis, support vector machines, stochastic gradient descent, nearest neighbors, Gaussian processes, Bayesian classifiers, decision trees, ensemble methods (like random forests, ADA boost, gradient tree boosting), artificial neuronal networks.
6. The system in accordance with any of the preceding claims, wherein a user is able to change annotations of signal sections or actions by means of interaction.
7. The system in accordance with any of the preceding claims, wherein the sensor technology comprises a selection of the following sensors:
   acceleration sensor, gyroscope, magnetic field sensor, microphone, camera, air pressure sensor, temperature sensor, humidity sensor.
8. The system in accordance with any of the preceding claims, wherein the sensor system comprises a tracking system the output data of which are input data for classification.
9. The system in accordance with any of the preceding claims, wherein the classification, apart from the action, also classifies a selection of the following information:
   position, alignment in space, velocity, distance.
10. The system in accordance with any of the preceding claims, wherein the output data of a tracking system are a selection of:
   positions, alignments in space, velocities, acceleration, jerk, signal strengths, channel impulse responses, run times and differential run times, pseudo distances, round-trip time, directional information, correlator values, SNR.
11. The system in accordance with any of the preceding claims, wherein the tool is any among the following:
   screwdriver and wrench, ratchet, torque wrench, turnscrew, drill, drill hammer/hammer drill, bell hammer, vibrator/vibrating plate, rammer, riveter, plug, presses, saws, separating machines (angle grinder), grinders, plane, dremel, files, graters, milling machines, trimmers, stirrers, stapler, hammer, nail guns, soldering and welding devices, gluing devices (hot glue guns), pliers, cutting tools, (scissors), cleaning systems (high-pressure, air, water), spraying systems (water, varnish, ...), axes, suckers, pumps, medical tools, special machines for producing or separating connections or in assembly, production and crafts.
12. The system in accordance with any of the preceding claims, wherein the specific actions are logically combined with output data of a tracking system.
13. The system in accordance with any of the preceding claims, wherein several actions are combined to form a work process.
14. The system in accordance with any of the preceding claims, wherein actions in a work process are additionally combined with a selection of the following information: order, alignment, position, time interval.
15. A computer program comprising a program code for performing the classification and annotation in accordance with any of the preceding claims when the program runs on a computer.

Embodiments described relate to a system that is provided with information so as to obtain a basis for a semi-automated assigning of labels to sensor data (e.g., method 700) and to afterwards to perform a semi-automated labelling (e.g., method 800 and 930). This information may be used with the same system or a different system so as to track or monitor a modelled work process as described, for example, in connection with Fig. 2.

That is, a system in accordance with embodiments may be configured for outputting the signal information associated with the predetermined sensor signal characteristic and for receiving the input signal 24 in a first operating mode, e.g., a learning mode. The system may be configured for tracking a workflow comprising a use of the tool or an apparatus similar to the tool in a second operating mode, e.g., a tracking mode or execution mode. That is, new sensor data 14 may be collected and its correspondence with the modelled workflow 28 may be tracked or evaluated. This may be performed with the same, identical tool that was used to learn the workflow but may also be performed with a suitable substitute of the tool.

In the second operating mode, the system may operate as a tracking system and may be configured for obtaining an operation sensor signal indicating a use of the tool, the apparatus similar to the tool respectively and for analyzing the operation sensor signal for a correspondence with a predetermined sensor signal characteristic associated with the workflow. That is, in the first operating mode, the sensor signal 14 may be a learning signal whilst the sensor signal 14 may be the operation sensor signal in the second operating mode.

In the first operating mode, the system may be configured for generating a set of predetermined sensor signal characteristics representing a predetermined workflow, e.g., a workflow that is captured in the learning mode and is stored, at least in a parameterized version as a predetermined workflow. The system may be configured for analyzing a plurality of operation sensor signals for a correspondence with the set of predetermined sensor signal characteristics. The system may be configured for outputting a result signal indicating a correspondence of the use of the tool, the apparatus similar to the tool respectively, with the predetermined workflow. That is, the system may be configured for outputting a result of the tracking, i.e., if the executed workflow is in accordance with the predetermined workflow, if deviations have occurred and possibly details to the deviations.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### Reference

[1] Stahlke et al.: Discrete Positioning Using UWB Channel Impulse Response and Machine Learning, 2018 International Conference on Indoor Positioning and Indoor Navigation (IPIN), 24-27 September 2018, Nantes, France.

## Claims

1. System comprising:
an analyzing unit (12) configured for receiving a sensor signal (14) indicating a use of a tool (36) and for analyzing the sensor signal (14) for a sensor signal characteristic (14c);
a database (16) having stored thereon at least one predetermined sensor signal characteristic (14p) and an associated signal information (14a);
a classification unit (18) configured for determining a correspondence between the sensor signal characteristic (14c) and the predetermined sensor signal characteristic (14p);
an interface (22) configured for outputting, to a user, the signal information (14a) associated with the predetermined sensor signal characteristic (14p); and for receiving an input signal (24) indicating at least a match or mismatch of the use of the tool with the predetermined sensor signal characteristic (14p);
wherein the classification unit (18) is configured for adapting the database (16) based on the input signal (24) for a subsequent sensor signal.

2. The system of claim 1, comprising a sensor arrangement (34) configured for providing the sensor signal (14).

3. The system of claim 2, wherein the sensor arrangement (34) comprises a sensor element being mechanically connected to the tool (36); a sensor element being arranged adjacent to the tool (36); and/or a sensor element being mechanically connected to a user of the tool (36).

4. The system of one of previous claims, wherein the analyzing unit (12) is configured for determining, from the sensor signal (14), an operating mode, a time interval (44) or time duration of a use of the tool (36).

5. The system of one of previous claims, wherein the system is configured for storing information derived from the sensor signal (14) and associated signal information (14a) as part of a workflow (28) to be tracked.

6. The system of one of previous claims, wherein the interface is configured for receiving the input signal (24) indicating a mismatch of the use of the tool (36) with the predetermined sensor signal characteristic (14p) and for receiving a corrected signal information; wherein the system is configured for storing information derived from the sensor signal (14) and the corrected signal information as a part of a workflow (28) to be tracked.

7. The system according to claim 5 or 6, wherein the workflow (28) comprises a plurality of steps (32), wherein for each step (32) an associated tool (36), an associated position and/or orientation within a working area and a duration is stored.

8. The system of one of previous claims, wherein the database (16) has stored thereon a plurality of predetermined sensor signal characteristics (14p) and a corresponding plurality of associated signal information (14a);
wherein the classification unit (18) is configured for determining a correspondence between the sensor signal characteristic (14c) and one of the plurality of predetermined sensor signal characteristics (14p) and to select this predetermined sensor signal characteristic as selected sensor signal characteristic (14pᵢ);
wherein the system is configured for outputting the signal information (14ai) associated with the selected sensor signal characteristic (14pi).

9. The system of one of previous claims, wherein the system is configured for outputting the signal information associated with the predetermined sensor signal characteristic (14p) and for receiving the input signal (24) in a first operating mode; and
for tracking a workflow (28) comprising a use of the tool (36) or an apparatus similar to the tool in a second operating mode.

10. The system of claim 9, wherein, in the second operating mode, the system is configured for obtaining an operation sensor signal indicting a use of the tool (36), the apparatus similar to the tool respectively and for analyzing the operation sensor signal for a correspondence with a predetermined sensor signal characteristic (14p) associated with the workflow (28).

11. The system of claim 9 or 10, wherein the system is configured for generating a set of predetermined sensor signal characteristics representing a predetermined workflow (28) in the first operating mode; and for analyzing a plurality of operation sensor signals for a correspondence with the set of predetermined sensor signal characteristics; and for outputting a result signal indicating a correspondence of the use of the tool (36), the apparatus similar to the tool respectively, with the predetermined workflow.

12. The system of one of previous claims, wherein the system is configured for sequentially receiving a plurality of sensor signals (14) representing at least a part of a workflow (28);
wherein the system is configured for classifying the plurality of sensor signals (14) using the database (16); for receiving a corresponding number of input signals (24); for updating the database (16) based on the input signals and for storing, in a memory, a workflow representation as a predetermined workflow, the workflow representation comprising a number of steps (32); wherein the system is configured for storing, for each step, information indicating the associated signal characteristic.

13. The system according to one of previous claims, wherein the sensor signal (14) comprises an action related portion indicating an action of the tool (36); and comprises a location related portion indicating a location or orientation of the tool.

14. A method (600) comprising:
receiving (610) a sensor signal indicating a use of a tool;
analyzing (620) the sensor signal for a sensor signal characteristic;
determining (630) a correspondence between the sensor signal characteristic and the predetermined sensor signal characteristic being stored in a database having stored thereon the least one predetermined sensor signal characteristic and an associated signal information;
outputting (640), to a user, the signal information associated with the predetermined sensor signal characteristic; and receiving an input signal indicating at least a match or mismatch of the use of the tool with the predetermined sensor signal characteristic;
adapting (650) the database based on the input signal for a subsequent sensor signal.

15. A computer readable digital storage medium having stored thereon a computer program having a program code for performing, when running on a computer, a method according to claim 14.
